(19) Europäisches Patentamt
European Patent Office
Office européen des brevets

(11) **EP 2 167 228 B1**

(12) **EUROPEAN PATENT SPECIFICATION**

(45) Date of publication and mention
of the grant of the patent:
**08.07.2015 Bulletin 2015/28**

(21) Application number: **08769406.3**

(22) Date of filing: **09.05.2008**

(51) Int Cl.:
*H01M 4/60* (2006.01)          *H01M 10/39* (2006.01)
*H01M 4/583* (2010.01)        *H01M 6/20* (2006.01)
*H01M 4/62* (2006.01)

(86) International application number:
**PCT/US2008/063270**

(87) International publication number:
**WO 2008/141200 (20.11.2008 Gazette 2008/47)**

(54) **LITHIUM FLUOROPOLYMER AND FLUORO-ORGANIC BATTERIES**

LITHIUMFLUORPOLYMER UND FLUORORGANISCHE BATTERIEN

FLUOROPOLYMÈRE DE LITHIUM ET BATTERIES FLUORO-ORGANIQUES

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **09.05.2007 US 928366 P**

(43) Date of publication of application:
**31.03.2010 Bulletin 2010/13**

(73) Proprietor: **California Institute of Technology
Pasadena, CA 91125 (US)**

(72) Inventors:
• **YAZAMI, Rachid
Singapore
557325 (SG)**
• **SHI, Qingfang
Brookfield
WI 53045 (US)**

(74) Representative: **Shaw, Matthew Nigel et al
Forresters
Skygarden
Erika-Mann-Strasse 11
80636 München (DE)**

(56) References cited:
**DE-A1- 19 917 000       US-A- 3 796 604
US-A- 4 840 859          US-A- 5 756 230
US-A1- 2002 168 569      US-B2- 6 696 204
US-B2- 6 815 121**

• **LADISLAV KAVAN: "Electrochemical Carbon",
CHEMICAL REVIEWS, vol. 97, no. 8, 1 December
1997 (1997-12-01), pages 3061-3082, XP55009918,
ISSN: 0009-2665, DOI: 10.1021/cr960003n**

**Description**

BACKGROUND OF THE INVENTION

Fluorinated carbons are used commercially as a positive electrode material in primary lithium batteries. Fluorination of graphite allows intercalation of fluorine between the carbon layers. Li/$CF_x$ battery systems are known to be capable of delivery of up to 700 Wh/kg, 1000 Wh/l, at room temperature, and at a rate of C/100 (i.e., a battery current of a 1/100th that of the capacity of the battery per hour). (See, e.g., Bruce, G. Development of a CFx D Cell for Man Portable Applications in Joint Service Power Expo. 2005; and Gabano, J.P., ed. Lithium Batteries, by M. Fukuda & T. Iijima. 1983, Academic Press: New York). Cathodes in these systems typically have carbon - fluoride stoichiometries typically ranging from $CF_{1.05}$ to $CF_{1.1}$. This cathode material, however, is known to be discharge rate limited, and currents lower than C/50 (battery current 1/50th that of the capacity of the battery divided by 1 hour) are often necessary to avoid cell polarization and large capacity loss. High electronic resistivity up to $10^{15}$ Ohm.cm of $CF_x$ is a potential cause of the observed discharge rate limitations, as there is a strong correlation between cathode thickness and performance; thicker cathodes tend to be more rate-limited. (See, e.g., V.N. Mittkin, J. Structural Chemistry, 2003, Vol. 44, 82-115, translated from Zhurnal Structunoi Khimii, 2003, Vol. 44, 99-138).

In a lithium/$CF_x$ cell, the cell overall discharge reaction, first postulated by Wittingham (1975) Electrochem. Soc. 122:526, can be schematized by equation (1):

$$\left(CF_x\right)_n + xnLi \leftrightarrow nC + nx\,LiF \qquad (1)$$

Thus, the theoretical specific discharge capacity $Q_{th}$, expressed in mAh·g$^{-1}$, is given by equation (2):

$$Q_{th}(x) = \frac{xF}{3.6(12 + 19x)} \qquad (2)$$

where F is the Faraday constant and 3.6 is a unit conversion constant.

The theoretical capacity of $(CF_x)_n$ materials with different stoichiometry is therefore as follows: x = 0.25, $Q_{th}$ = 400 mAh·g$^{-1}$; x = 0.33, $Q_{th}$ = 484 mAh·g$^{-1}$; x = 0.50, $Q_{th}$ = 623 mAh·g$^{-1}$; x = 0.66, $Q_{th}$ = 721 mAh·g$^{-1}$; and x = 1.00, $Q_{th}$ = 865 mAh·g$^{-1}$.

Electrochemical reduction of fluorinated polymers in the presence of lithium has also been reported. Kavan discusses cathodic reduction results for various polymers including poly(tetrafluoroethylene) (PTFE) and poly(chlorotrifluoroethylene) (PCTFE) (Kaven, L., Chem. Rev., 97(8), 3061-3082). GB1357286 to Societe des Accumlateurs Fixes et de Traction reports electrochemical reduction of PTFE to carbon particles.

Electrochemical cells with fluorinated polymers as active materials have been reported. GB1357286 reports electrochemical cells of the non-aqueous electrolyte type having a negative active material based on lithium, a positive active material comprising at least one fluorinated polymer which is a derivative of a hydrocarbon, and an electrolyte solvent constituted by dioxolane, a tetrahydrofuran-dimethoxyethane mixture or a tetrahydrofuran-dimethylether of a diethylene glycol mixture. A conductive substance may be added to the positive active material in the amount of 1-12% for lamp black and slightly higher amounts for graphite. The active material may further comprise a metal compound which is reducible to the metal state, such as iron sulphide or copper oxide. Discharge curves reported for primary cells with cathodes formed of PTFE and graphite show discharge voltages less than 1.25 V for discharges of 200, 100, and 50 ohm resistors. The discharge curve reported for primary cells with cathodes formed of PTFE and lampblack also shows a discharge voltage less than 1.25 V.

More typically, fluorinated polymers such as polyvinylidene difluoride (PVDF) and PTFE are often used as binder materials in electrode compositions including fluorinated carbonaceous materials or other active materials. The amount of binder is often minimized in order to maximize the amount of active material. US Patent Publication 2007-0231697 to Yazami et al. describes incorporation of up to 15 wt% binder in combination with subfluorinated carbonaceous active material. However, electroactive layers comprising 2-40% by weight of fluoropolymer binder and 98-60% carbon or oxide fillers have been reported in US Published Patent Application 2002/0168569 to Barriere et al.

A variety of fluorinated carbonaceous materials have been suggested for use in battery applications. U.S. Patent 3,536,532 to Watanabe et al. describes a primary cell including a positive electrode having as the principal active material a crystalline fluorinated carbon represented by the formula $(CF_x)_n$. where x is not smaller than 0.5 but not larger than 1. U.S. Patent 3,700,502 to Watanabe et al. describes a battery including a positive electrode having as its active material an amorphous or partially amorphous solid fluoridated carbon represented by the Formula $(CF_x)_n$, wherein x is

in the range of from greater than 0 to 1. U.S. Patent 4,247,608 to Watanabe et al. describes an electrolytic cell including a positive electrode having as the main active material a poly-dicarbon monofluoride represented by the formula $(C_2F)_n$ wherein n is an integer. U.S. Patent Application Publication 2007/0231696 to Yazami et al. describes fluorination of multi-layered fluorinated nanomaterials such as multi-walled nanotubes for incorporation into electrochemical devices. The fluorinated material may contain an unfluorinated and/or "lightly fluorinated " phase. Fluorinated nanotube materials are also described by Chamssedine et al. and Yazami et al. (F. Chamssedine, Reactivity of Carbon Nanotubes with Fluorine GasChem. Mat. 19(2007)161-172; Yazami et al., Fluorinated Carbon Nanotubes for High Energy and High Power Densities Primary Lithium Batteries Electrochem. Comm. 9(2007)1850-1855). U.S. Patent Application Publication 2007/0231697 to Yazami et al. describes production of subfluorinated graphite and coke in which the subfluorinated material contains unfluorinated and/or "lightly fluorinated " phase and use of these materials in electrochemical devices. U.S. Patent Application Publication Nos. 2007/0077495 and US2007/0077493 to Yazami et al. and International Patent Publication WO/2007/040547 also describe production and use of subfluorinated graphite materials.

Electrode compositions incorporating fluorinated carbon materials may also incorporate an electrically conductive material such as carbon black or graphite. U.S. Patent 6,956,018 to Kozawa describes incorporation of 5-40 wt% of electrically conductive material based on the weight of the active and conducting material into an electrode composition containing polycarbonfluoride $(CF_x)_n$; the electrode composition is used in combination with a zinc anode and an aqueous alkaline electrolyte. U.S. Patent 5,753,786 to Watanabe et al. describes incorporation of up to 100 wt% of an electrically conductive material (based on the amount of active material) into an electrode composition. The active material is a graphite fluoride obtained by fluorination of a decomposed residual carbon. U.S. Patent 4,247,608 to Watanabe et al. reports electrode compositions incorporating an electrically conductive agent and containing $C_2F$. Electrode compositions with as little as 25 % by weight $C_2F$ are reported.

Electrode compositions combining different fluorinated carbonaceous materials have also been reported. U.S. Patents 4,686,161 and 4,765,968 to Shia et al. report elimination of voltage suppression by blending an additive $CF_x$ which does not show significant voltage suppression with a bulk $CF_x$ which does show voltage suppression. U.S. Patent 4,681,823 to Tung et al. report mixtures of a fully or overfluorinated $CF_x$ with a small amount of underfluorinated material to eliminate voltage suppression. U.S. Patent Application US 2007/0281213 to Pyszczek reports blends of fluorinated carbon material which provide an electrochemical cell voltage characteristic that may be used to predict remaining energy capacity as an electrochemical cell discharges during service.

US 3,796,604 (Gabano J et al.) discloses a lithium base electrochemical generator having a non-aqueous electrolyte and a negative electrode, which mainly contains lithium. The positive active material comprises at least a fluorinated hydrocarbon polymer and a compound which can be reduced to the metallic state when discharge occurs and preferably having a value in the discharged state in the vicinity of that of the fluorinated polymer. The solvent of the electrolyte is a mixture of tetrahydrofuran-dimethoxyethane or tetrahydrofuran-dimethylether of diethylene glycol, or dioxolane.

DE 19917000 A1 discloses a primary lithium ion cell having a positive electrode active material comprising PTFE.

BRIEF SUMMARY OF THE INVENTION

In one aspect, the invention provides electrochemical cells in which one of the electrodes comprises an active material comprising a fluoropolymer or fluoro-oligomer having carbon-fluorine bonds, as recited in the appended claims.

Because of the presence of C-F bonds, the fluoropolymer or fluoro-oligomer can be used as the positive electrode material (e.g. as the cathode material in a primary battery) in lithium primary and secondary batteries. In an embodiment, the electrode comprises a mixture of a solid fluoropolymer or fluoro-oligomer active material with a substantial quantity of electrically conductive material. Due to the light elements (C, H, F, O...) present in the fluoropolymer and to a high energy of formation of LiF, the specific capacity (mAh/g) and discharge voltage of Li-Fluoropolymer/fluoro-oligomer batteries are capable of providing high specific capacities (mAh/g) and discharge voltages. For example, the theoretical capacity of PVDF and PTFE is 837 and 1072 mAh/g, respectively. Fluoropolymer containing electrodes of the present invention are useful in primary and secondary electrochemical cells, including lithium ion batteries. Electrodes of the present invention include fluoropolymer active materials provided in a solid state, liquid state or combination of solid and liquid states.

It has been found that the discharge capacity and voltage of electrochemical cells incorporating fluoropolymer positive electrodes can increase significantly with discharge temperature, making the cells suitable for high temperature applications. These electrochemical cells can be useful in automotive and oil drilling applications where temperatures in excess of 100-150 °C are typically encountered. At temperatures substantially above room temperature (e.g., $\geq$ 100 °C), such an electrochemical cell can provide discharge voltages up to 3 V and capacities in excess of 300 mAh/g (as measured per gram of active material).

In an embodiment, the invention provides an electrochemical cell in accordance with claim 1. In different embodiments, the fluoropolymer is solid, semisolid, or molten. The electrolyte may be a nonaqueous liquid electrolyte.

In an embodiment, the electrolyte comprises a salt of an alkali metal or alkaline earth metal dissolved in an aprotic organic solvent, wherein the boiling temperature of the organic solvent is less than the temperature of the first electrode. In another embodiment, the electrolyte comprises an ionic liquid. In an embodiment, the electrolyte is not a fusible metal salt having a melting point greater than the decomposition temperature of the fluoropolymer.

In another aspect, the invention provides a method of generating electrical energy electrochemically in accordance with claim 8. In an embodiment, the electrochemical cell is heated to a temperature greater than or equal to 100°C. Such an electrochemical cell can provide discharge voltages up to 3 V for extended periods of time. When the source of alkali metal ions is lithium or a lithium alloy, the temperature to which the electrochemical cell is heated may be below the melting point of lithium or the lithium alloy.

Fluoropolymers and fluoro-oligomers suitable for use with the invention have fluorine-carbon bonds. In an embodiment, reaction of lithium ions with fluorine bound to carbon is believed to provide electrochemical activity of the polymer or oligomer. In other embodiments, reaction with other alkali metals or with alkaline earth metals can also provide electrochemical activity of the polymer or oligomer.

In an embodiment, the fluoropolymer is a fluorocarbon polymer in which one or more of the hydrogen atoms of a hydrocarbon polymer have been replaced by fluorine. Such polymers include poly (vinylidene difluoride), also referred to as poly(vinylidene fluoride), (PVDF) and polytetrafluoroethylene (PTFE). In an embodiment, the ratio of C-F bonds to C-H bonds is greater than or equal to one. In an embodiment, the fluoropolymer is a homopolymer or copolymer formed from vinylidene fluoride monomers; the polymer has units which can be described by $(CF_2CH_2)_n$. Copolymers formed from vinylidene fluoride monomers (vinylidene fluoride copolymers) include, but are not limited to, copolymers of PVDF and hexafluoropropylene (HFP) and FKM fluorinated elastomers (also referred to as FPM). In another embodiment, the fluoropolymer is a homopolymer or copolymer formed from tetrafluoroethylene monomers; the polymer has units which can be described by $(CF_2CF_2)_n$. Tetrafluoroethylene copolymers include, but are not limited to, ethylene tetrafluoroethylene (ETFE) and fluorinated ethylene propylene (FEP). In another embodiment, the fluoropolymer is a chlorotrifluoroethylene homopolymer or copolymer. Chlorotrifluoroethylene copolymers include, but are not limited to ethylene chlorotrifluoroethylene (ECTFE). Where the polymer is a copolymer of one or more unfluorinated monomers with one or more fluorinated monomers, in an embodiment the ratio of the fluorinated monomer(s) to unfluorinated monomer(s) is from 0.25-0.75.

In an embodiment, the fluoropolymer component of the first electrode mixture may be a mixture or blend of two or more fluoropolymers. Similarly, the fluoro-oligomer component of the first electrode mixture may be a mixture or blend of two or more fluoro-oligomers. In another embodiment, the first electrode mixture may comprise both a fluoropolymer component and a fluoro-oligomer component.

In another embodiment, the fluoropolymer may also contain oxygen-carbon bonds and/or hydrogen-carbons. Such a fluoropolymer may be described by the general chemical formula $(C_nF_mH_pO_q)_r$. In some embodiments the overall cell reaction in this case may be schematized as:

$$(C_nF_mH_pO_q)_r + rmLi \rightarrow (C_nH_pO_q)_r + rmLiF \qquad (3)$$

wherein n, m, p, q and r are integers that characterize the composition of the fluoropolymer active material In practice, all of the fluorine in the polymer need not react. In addition, oxygen in such fluoropolymers may be capable of reaction with lithium ions to form $Li_2O$ or LiOH. Such polymers include copolymers of perfluorovinyl ethers such as perfluorovinyl ether polytetrafluoroethylene copolymers (e.g. perfluoralkoxy (PFA)). In an embodiment, the ratio of C-F bonds to C-H bonds is greater than or equal to one. In an embodiment, the ratio of C-F bonds to C-O bonds is greater than or equal to one.

A variety of polymeric materials have been proposed for use as electrochemically active materials which derive their activity through mechanisms other than formation of LiF. For example, a number of electrically conducting polymers have been proposed for use as electrode materials, such as polyacetylene, polyaniline, polypyrrole, polythiophene, poly(p-phenylene), polyazulene, polycarbazole, ferrocene-substituted polyethylene or carbozole substituted polyethylene (Novak, P., Chem. Rev., 97(1), 1997, 207-282). As another example, polymers containing stable radicals, such as the nitroxide/nitroxyl radical, have been proposed for use as active materials (Ashide, H. et al. Electochem. Soc. Interface, Winter 2005, 32-36). In an embodiment, fluoropolymers useful for the present invention do not derive their electrochemical activity primarily from these mechanisms. In an embodiment, fluoropolymers useful for electrodes for the electrochemical cells of present invention are not electrically conducting. In another embodiment, fluoropolymers useful for electrodes for the electrochemical cells of present invention do not contain stable radicals.

In an embodiment, the amount of fluoropolymer in the mixture comprising fluoropolymer and conductive material is greater than 40 wt%. In other embodiments, the amount of fluoropolymer is greater than 50 wt%, greater than 40 wt% to less than or equal to 70%, from 50% to 70%, or from 50% to 60%.

In addition to functioning as an electrochemically active material, the fluoropolymer or fluoro-oligomer component of the first electrode composition may also function as a binder for the electrically conducting material. When the composite of the fluoropolymer or fluoro-oligomer and the electrically conducting material (and other optional components) is included in the electrochemical cell, the composite is typically pressed against a current collector in order to maintain physical and electrical contact with the current collector. In an embodiment, the pressure within the cell (e.g. the stacking pressure) is sufficient to prevent demixing of the electrically conducting material from the fluoropolymer or fluoro-oligomer, even when the fluoropolymer or fluoro-oligomer is in a swollen or at least partially molten state. In another embodiment, a blend of at least two polymers may be used in the first electrode composition, with at least one of the polymers being a fluoropolymer and the other polymer not being a fluoropolymer. The combination of these two polymers may act as a binder.

Addition of substantial amounts of electrically conductive materials to the fluoropolymer or fluoro-oligomer can improve the discharge performance of the electrode. For example, incorporation of substantial amounts of electrically conducting material in the electrode composition can increase the maximum discharge rate and/or the specific capacity per weight of active material of the electrode composition. In an embodiment, the amount of electrically conductive material is greater than 20 wt% of the first electrode mixture. In other embodiments, the electrically conductive material may be from greater than 20 wt% to 60 wt%, greater than 30 wt%, 30-60 wt%, or 30-50 wt% of the mixture. In an embodiment, the electrically conductive material forms the balance of the first electrode composition. In another embodiment, the combined amount of electrically conductive material and second active material is 30 wt%-60 wt% or 40 wt%-50 wt%. In an embodiment, the electrically conductive material and the second active material together form the balance of the first electrode composition. In an embodiment, the ratio of fluoropolymer to electrically conducting material is from 0.66 to 2.3. In different embodiments, the room temperature conductivity of the composite of the fluoropolymer, the electrically conductive material and the optional second active material is greater than $10^{-10}$ Scm$^{-1}$, greater than or equal to $10^{-8}$ Scm$^{-1}$, or greater than or equal than $10^{-6}$ Scm$^{-1}$ (this does not include any contribution from the electrolyte and so may be referred to as the "intrinsic conductivity"). The electrical conductivity may be measured after densification of the electrode. Suitable electrically conductive materials, include, but are not limited to, powdered metals and carbonaceous materials such as acetylene black, carbon black, powdered graphite, cokes, carbon fibers, and carbon nanotubes.

In another embodiment, the mixture of the fluoropolymer and the electrically conductive material further comprises a second active material which differs from the electrically conductive material. In an embodiment, the amount of the second active material is less than or equal to 20 wt% of the first electrode composition or mixture. The inclusion of minor amounts of a second active material can increase the discharge voltage of the battery. This second active material may also be called a depolarizer. The second active material may be a subfluorinated carbon material or any other positive electrode material known to the art. The second active material component may comprise a single active material composition or a mixture of two or more active materials. Suitable active materials for primary and rechargeable lithium batteries include, but are not limited to $MnO_2$, $FeS$, $FeS_2$, S (sulfur), $AgV_2O_{5.5}$ (Silver Vanadium Oxide or SVO), $LiMO_2$ (M=Co, Ni, Mn, Al, Li or a combination thereof), $LiMn_2O4$, $LiMPO_4$ ((M=Co, Ni, Mn, Al, Li or a combination thereof), CF and CFx.

The temperature of the electrochemical cell, including the temperature of the first electrode comprising the fluoropolymer or fluoro-oligomer and the optional electrically conductive material can be an important parameter in the performance of the cell. In an embodiment, the temperature of the first electrode is greater than 50 °C, greater than or equal to 70 °C, greater than or equal to 100°C, from 70°C-150°C, or from 100°C-150°C. In an embodiment the temperature of the first electrode and optionally the electrochemical cell is less than 400 °C. In an embodiment, the temperature of the first electrode is greater than or equal to 50%, 75%, 80%, or 90% of the melting temperature of the fluoropolymer. In an embodiment, the first and second electrodes and electrolyte are at substantially the same temperature (for example, through exposure of the cell to an elevated ambient temperature). In another embodiment, the temperature of the first electrode may be controlled separately than the temperature of the other elements of the cell.

BRIEF DESCRIPTION OF THE DRAWINGS

Figures 1a-1c show discharge curves obtained for a Li-PVDF battery (ratio of PVDF to acetylene black graphite (ABG) =1:1) at 140 °C and a discharge current of 2.7 mA/g (PVDF).

Figures 2a-2b show discharge curves obtained for a Li-PVDF battery (ratio of PVDF: ABG = 1:1).at room temperature and a discharge current of 2.63 mA/g (PVDF) and 15 mA/g (PVDF), respectively.

Figures 3a-3b show discharge curves obtained for a Li-PVDF battery (ratio PVDF: ABG =1:2) at room temperature and a discharge current of 3.5 mA/g (PVDF) and 17 mA/g (PVDF), respectively.

Figure 4 shows a discharge curve obtained for a Li-PVDF battery (PVDF: ABG =1:4) at room temperature and a discharge current of 4 mA/g (PVDF)

Figure 5 shows a discharge curve obtained for a Li-PVDF battery (PVDF: ABG=6:4) at various temperatures and a discharge current of 10 $\mu$A.

Figure 6 shows a discharge curve obtained for a pre-heated Li-PVDF battery (PVDF: ABG=6:4) at various temperatures and a discharge current of 10 $\mu$A.

Figure 7 shows a discharge curve obtained for a Li-PTFE battery (PTFE: ABG =1:1) at 72 °C and a discharge current of 2 $\mu$A.

Figure 8 shows a discharge curve obtained for a Li-PTFE battery (PTFE: ABG =1:1) at room temperature and a discharge current of 10 $\mu$A.

Figure 9 shows a discharge curve obtained for a Li-PVDF-CF$_x$ battery (PVDF: ABG=6:4; 20 wt% CFx, x=0.74) at various temperatures and a discharge current of 10 $\mu$A.

Figure 10 shows a recharging curve and subsequent discharge curve for a Li-PVDF battery.

DETAILED DESCRIPTION OF THE INVENTION

The term "electrochemical cell" refers to devices and/or device components that convert chemical energy into electrical energy or electrical energy into chemical energy. Electrochemical cells typically have two or more electrodes (e.g., positive and negative electrodes) wherein electrode reactions occurring at the electrode surfaces result in charge transfer processes. Electrochemical cells include, but are not limited to, primary batteries, secondary batteries, lithium batteries, and lithium ion batteries. General cell and/or battery construction is known in the art, see e.g., U.S. Pat. Nos. 6,489,055, 4,052,539, 6,306,540, Seel and Dahn J. Electrochem. Soc. 147(3) 892-898 (2000). Electrochemical double layer capacitors (EDLC) and hybrid battery-EDLC systems are also considered to be electrochemical cells in this application. (Conway, B, Journal of Solid State Electrochemistry, 7: 637 (2003); Hu X et al. J. Electrochem. Soc., 154 (2007) A1026-A1030). The present disclosure also includes combinations of secondary electrochemical cells in series and/or in parallel as batteries and/or supercapacitors.

The term "capacity" is a characteristic of an electrochemical cell that refers to the total amount of electrical charge an electrochemical cell, such as a battery, is able to hold. Capacity is typically expressed in units of ampere-hours. The term "specific capacity" refers to the capacity output of an electrochemical cell, such as a battery, per unit weight. Specific capacity is typically expressed in units of ampere-hours kg$^{-1}$ or mAh/g. The theoretical specific capacity is referred to as $Q_{th}$.

The term "discharge rate" refers to the current at which an electrochemical cell is discharged. Discharge current can be expressed in units of amperes. Alternatively, discharge current can be expressed as 'C/n" rate, where n is the number of hours theoretically needed to fully discharge the cell. For example, under C/5 rate and 3C rate, the full discharge is expected to be reached in 5 hours and 20 minutes, respectively. Under a constant discharge current of intensity I$_x$, the theoretical discharge time t$_d$ is given by $Q_{th}(x)=I_x t_d$. I$_x$ is the discharge current intensity in units of current per unit weight (e.g. mA/g). Accordingly a discharge current at C/n rate is given by Equation (4):

$$I_x = \frac{Q_{th}(x)}{n}, \qquad (4)$$

I$_x$ in mA/g, $Q_{th}(x)$ in mAh/g and n in hours.

"Current density" refers to the current flowing per unit electrode area.

"Active material" refers to the material in an electrode that takes part in electrochemical reactions which store and/or deliver energy in an electrochemical cell. The present invention provides electrochemical cells having a positive electrode with a fluoropolymer and/or a fluoro-organic active material.

The electrochemical cell may further comprise an ion transporting material disposed between the first and second electrode. In an embodiment, the electrochemical cell is a primary battery. In another embodiment, the electrochemical cell is a secondary battery. In an embodiment, the electrochemical device is predischarged.

The invention also provides electrode compositions comprising a fluoropolymer or fluoro-oligomer, an electrically conducting material, and a second active material. In an embodiment, the first electrode (positive electrode) comprises a first electrode composition which in turn comprises a mixture of a fluoropolymer or fluoro-oligomer and an electrically conductive material. In an embodiment, the first electrode composition comprises a fluoropolymer. In another embodiment, the first electrode composition comprises a fluoro-oligomer. As used herein, the current collector is not intended to be included in the first electrode composition and the wt% electrically conductive material in the first electrode composition does not include the current collector. In addition, the weight percentages given for the first electrode composition do not include electrolyte.

As previously described, the fluoropolymer or fluoro-oligomer has fluorine-carbon bonds. In an embodiment, the active material comprises a fluoro-oligomer. As used herein, a fluoro-oligomer includes from 2-10 repeating structural units. In an embodiment, the fluoro-oligomer is a fluorocarbon oligomer in which one or more of the hydrogen atoms of a hydrocarbon oligomer have been replaced by fluorine. Such oligomers include oligomers formed from vinylidene difluoride monomers or tetrafluoroethylene monomers. In an embodiment, the ratio of C-F bonds to C-H bonds is greater than or equal to one. In an embodiment, the fluoro-oligomer comprises vinylidene fluoride monomers; the oligomer has units which can be described by $(CF_2CH_2)_n$. In another embodiment, the fluoro-oligomer comprises tetrafluoroethylene monomers; the oligomer has units which can be described by $(CF_2CF_2)_n$. In another embodiment, the fluoro-oligomer comprises chlorotrifluoroethylene monomers. In an embodiment, the fluoro-oligomer is in the solid state at room temperature. Such fluoro-oligomers may be completely soluble in organic electrolyte solvents. In another embodiment, the fluoro-oligomer is liquid at room temperature. When the fluoro-oligomer is liquid or soluble in the electrolyte at the use temperature of the electrochemical cell, the electrochemical cell may comprise a first electrically conducting electrode, a positive electrode composition comprising the fluoro-oligomer in electrical contact with the first electrode, a second electrode comprising a source of alkali metal or alkaline earth metal ions, and an electrolyte provided between the first and the second electrodes. The first electrically conducting electrode may be formed of a porous conducting material such as carbon. The electrolyte may be included in the positive electrode composition, or may be separate.

As used herein, a fluoropolymer includes greater than 10 repeating structural units. As used herein, the term fluoropolymer is not intended to include fluorinated carbonaceous materials such as fluorinated graphite, fluorinated coke, or other fluorinated carbonaceous materials; such materials are sometimes referred to as polycarbon fluorides or fluorographites. In an embodiment, the fluoropolymer has a molecular weight greater than or equal to 500. In an embodiment, the backbone of the fluoropolymer is formed by carbon-carbon bonds; the polymer may be linear or branched.

The fluoropolymer in the solid state may be crystalline, amorphous, or may contain a mixture of crystalline and amorphous regions. In an embodiment, the fluoropolymer has a defined melting or liquefying temperature or melting temperature range. In an embodiment, the melting temperature of the polymer is between 100°C and 200 °C. In an embodiment, the fluoropolymer is a melt-processable polymer. When the fluoropolymer is molten at the use temperature of the electrochemical cell, the electrochemical cell may comprise a first electrically conducting electrode, a positive electrode composition comprising the fluoropolymer in electrical contact with the first electrode, a second electrode comprising a source of alkali metal or alkaline earth metal ions, and an electrolyte. The first electrically conducting electrode may be formed of a porous conducting material such as carbon. The electrolyte may be included in the positive electrode composition, or may be separate.

In another embodiment, the fluoropolymer may not have a well defined melting temperature or range, in which case the temperature of the first electrode may be referenced to the decomposition temperature of the fluoropolymer. When decomposition occurs over a range of temperatures, the decomposition temperature may be viewed as the lowest temperature at which substantial decomposition occurs. In an embodiment, the temperature of the first electrode is greater than or equal to 50% or 75% of the decomposition temperature of the polymer. In an embodiment, the temperature of the fluoropolymer is less than the decomposition temperature of the polymer whether or not the polymer has a well defined melting point or range.

The extent of fluoropolymer crystallinity can influence the amount of swelling of the fluoropolymer in an electrolyte which includes an organic solvent, with greater solvent uptake being expected for less crystalline fluoropolymers: In an embodiment, the fluoropolymer is swollen by the electrolyte solvent. The amount of solvent uptake may depend on the temperature, with greater amounts of solvent uptake expected at higher temperatures. Greater amounts of swelling can improve ionic conductivity through the polymer. In an embodiment, the fluoropolymer is capable of greater than 20%, 30%, 40%, or 50% electrolyte solvent uptake at the use temperature of the electrochemical cell (as measured via standard solvent uptake tests of the polymer in the absence of other electrode composition components).

In an embodiment, the polymer is selected from the group consisting of: polytetrafluoroethylene (PTFE), perfluoroalkoxy polymer (PFA), fluorinated ethylene propylene (FEP), ethylene tetrafluoroethylene (ETFE), ethylene chlorotrifluoroethylene (ECTFE), polyvinylidene fluoride (PVDF), polychlorotrifluoroethylene (PCTFE), FFKM, FKM. PTFE, PFA, and FEP are all sold under the commercial or trade name Teflon. ETFE is sold under the trade names Tefzel or Fluon. ECTFE is sold under the trade name Halar. PVDF is sold under the trade name Kynar. PCTFE is sold under the trade name Kel-F. FFKM is sold under the trade names Kalrez and Tecnoflon FFKM. FKM is sold under the trade names Viton and Tecnoflon. Other suitable polymers include those described by Ameduri et al. (J. Fluorine Chem., 114 (2002), 171-176), which is hereby incorporated by reference to the extent not inconsistent with the disclosure herein.

In an embodiment, the fluoropolymer is initially in the form of particles. However, heating of the particles may change their initial shape and/or form. Fluoropolymer active materials may also be provided in other physical states including as fibers, thin films, and coatings. The electrode fabrication process may involve dissolution of the fluoropolymer, in which case the original size is not retained. In an embodiment, the fluoropolymer particles have an initial average cross sectional dimension selected over the range of 1 to 1000 micrometers.

In an embodiment, the electrically conductive material and the fluoropolymer or fluoro-organic materials form a mixture. In an embodiment, the electrically conductive material and the fluoropolymer or fluoro-organic materials form a composite material. In an embodiment, the average ratio of electrically conducting material to fluoropolymer or fluoro-organic material may be uniform on a length scale which is large compared to the size of the particles of active material or electrically conducting material, such as 1 mm or larger. However, the ratio of electrically conducting material to fluoropolymer or fluoro-organic material may not be uniform on smaller length scales. For example the electrically conducting material may form aggregates, channels, or networks.

The electrically conductive material may be selected from, for example, acetylene black, carbon black, powdered graphite, cokes, carbon fibers, carbon nanotubes, graphite whiskers and metallic powders such as powdered nickel, copper, aluminum, titanium, and stainless steel. In an embodiment, the electrically conductive material is a carbonaceous material. In another embodiment, the electrically conductive material may be an electrically conducting polymer. In an embodiment, the electrical conductivity of this material is greater than that of the subfluorinated carbonaceous material or the fluoropolymer or fluoro-organic compound. The electrically conductive material may be in particulate form to facilitate its mixture with the other components of the electrode composition. In an embodiment, the particle size of the conductive material is from 1 micrometer to 100 micrometers.

In an embodiment, the second active material included in the positive electrode composition is a subfluorinated carbonaceous material. As used herein, the expression "subfluorinated carbonaceous material" refers to a multicomponent carbonaceous material having a fluorinated carbonaceous component in which at least some of the carbon is strongly bound to fluorine and an unfluorinated carbonaceous component and/or a "lightly fluorinated" carbonaceous component in which fluorine is not strongly bound to carbon. The subfluorinated material may be described by the formula $CF_x$, in which x is less than one

In another aspect of the invention, the electrode composition includes a subfluorinated carbon material as a depolarizer. In different embodiments, the fluorine to carbon ratio of the subfluorinated carbonaceous material is 0.18 to 0.95, 0.33-0.95, 0.36-0.95, 0.5-0.95, greater than 0.5 to 0.95, 0.63-0.95, 0.66-0.95, 0.7-0.95, or 0.7-0.9. In an embodiment, the sub fluorinated carbonaceous material is in the form of particles; the particles may be from one micrometer to 100 micrometers in average size.

In another aspect of the invention, the electrode composition includes a mixture of different subfluorinated carbon materials. In an embodiment, the different fluorinated carbon materials have different fluorination levels. In another embodiment, the different fluorinated materials may be based on different carbonaceous materials (for example the electrode composition may be a mixture of fluorinated carbon and fluorinated coke, with the fluorinated materials having the same or different fluorination levels). The combination of fluorinated carbon materials may be used to tailor the performance of the device. For example, a fluorinated carbonaceous material that has a relatively high energy density and a relatively low power capability can be blended with a fluorinated carbonaceous material that has a higher power capability to obtain a mixture suitable for relatively high energy density and power density applications. In different embodiments, the amount of the first material is from 5 wt % to 95 wt% , 10 wt% to 90 wt%, from 20 wt % to 80 wt%, from 30 wt% to 70 wt%, from 40 wt% to 60 wt%, from 30 wt % to 95 wt %, from 40 wt % to 95 wt%, from 50 wt % to 95 wt %, greater than 50 wt% to 95 wt %, from 60 wt % to 95 wt %, from 70 wt % to 95 wt %, from 40 wt % to 90 wt%, from 50 wt % to 90 wt %, greater than 50 wt% to 90 wt %, from 60 wt % to 95 wt %, from 70 wt % to 90 wt %, based on the total weight of the first and second materials.

The second electrode comprises a source of alkali metal or alkaline earth metal ions. Alkali metals include Li, Na, K, Rb, Cs, or Fr. In an embodiment, the alkali metal cations are Li cations. Alkaline earth cations include Be, Mg, Ca, Sr, and Ba. In an embodiment, the anode comprises lithium or a lithium alloy. The anode may comprise, for example, a foil or film of lithium or of a metallic alloy of lithium (LiAl, for example), or of carbon-lithium. In an embodiment, the anode comprises a lithium metal.

The electrolyte is provided between the first and second (or positive and negative electrode). If the electrolyte is liquid, some of the electrolyte liquid may be absorbed into the fluoropolymer of the first electrode, but some is expected to remain between the first and second electrode. In an embodiment, the electrolyte is an ionically conducting medium comprising cations selected from the group consisting of alkali metal cations or alkaline earth metal cations. In an embodiment, the alkali metal cations are Li cations.

In an embodiment, the electrolyte is a nonaqueous electrolyte composed of an alkali metal or alkaline earth metal salt dissolved in an aprotic organic solvent. Suitable solvents include, but are not limited to ethers, esters, carbonates and their fluorinated derivatives. In an embodiment, the solvent is selected from the group consisting of propylene carbonate (PC), ethylene carbonate (EC), ethyl methyl carbonate (EMC), dimethyl ether (DME), and mixtures thereof. Mixtures of PC and DME are common, typically in a weight ratio of about 1:3 to about 2:1. In an embodiment, the solvent is PC. In an embodiment, the solvent is other than dioxolane, a tetrahydrofuran-dimethoxyethane mixture or a tetrahydrofuran-dimethylether of a diethylene glycol mixture. In an embodiment, the solvent is selected so that its boiling temperature is greater than the intended use temperature of the electrochemical cell. In an embodiment suitable for use with lithium anodes, the solvent is selected so that its boiling temperature is greater than the melting point of lithium (about 180 ° C). Suitable lithium salts for use in electrolytes include, without limitation, $LiBF_4$, $LiPF_6$, $LiCF_3SO_3$, $LiClO_4$, $LiAlCl_4$, and the like. In an embodiment, the electrochemical cell further comprises a "separator" material located between the positive and negative electrodes. Conventional separator materials have low electrical resistance and exhibit high strength, good chemical and physical stability, and overall uniform properties. Preferred separators herein, as noted above, are microporous and nonwoven materials, e.g., nonwoven polyolefins such as nonwoven polyethylene and/or nonwoven polypropylene, and microporous polyolefin films such as microporous polyethylene, Poly(tetcafluoro)ethylene (PTFE) and glass fibers. An exemplary microporous polyethylene material is that obtained under the name Celgard.RTM. (e.g., Gelgard.RTM. 2400, 2500, and 2502) from Hoechst Celanese.

In another embodiment, the electrolyte is an alkali metal or alkaline earth metal salt dissolved in an ionic liquid. In an embodiment, the ionic liquid is a "roomtemperature" ionic liquid. In an embodiment, the melting point of the ionic liquid is less than 100 °C. A variety of room temperature ionic liquids (RTILS) are known to the art and have been tested for use in lithium-containing batteries. These RTILS include, but are not limited to imidazolium cation-based RTILS (Seki, S. et al, 2007, J. Electrochem. Soc., 154(3), A173-A177).

In an embodiment, the electrolyte is other than a fusible metal salt. In an embodiment, the electrolyte is other than a fusible metal salt having a melting temperature in excess of the melting temperature of lithium. Fusible metal salts are used in thermal batteries and typically have melting temperatures in excess of 300 °C. For example, a thermal battery employing the alkali metal halide electrolyte LiCI-KCI (eutectic), which has a melting point of 352°C, is described in U.S. 4,840,859.

In another embodiment, the electrolyte is a solid or a gelled polymer electrolyte which comprises alkali metal cations or alkaline earth metal cations. The solid or gelled polymer electrolyte also serves as a physical separator. Examples of solid polymer electrolytes include chemically inert polyethers, e.g., poly(ethylene oxide) (PEO), poly(propylene oxide) (PPO), and other polyethers, wherein the polymeric material is impregnated or otherwise associated with a salt, e.g., a lithium salt such as those set forth above. Examples of gelled polymer electrolytes include polyvinylidene difluoride (PVDF) homo- or co-polymer impregnated or otherwise associated with a non-aqueous electrolytes such as those set forth in the preceding paragraphs.

The discharge capacity and voltage of the electrode can be affected by electrode parameters other than electrode composition, including, but not limited to, the electrode thickness, the electrode density, the mixing process, and adhesion of the electrode to the substrate.

The electrode may be prepared via a slurry process. In such a process, a slurry may be formed upon admixture of the active material(s) and conductive material with a solvent. The solvent may act to dissolve the fluoropolymer or fluoro-organic active material. This slurry is then deposited or otherwise provided on a conductive substrate (current collector) to form the electrode. If the solid particles are elongated, they may be at least partially aligned during the deposition process. For example, shear alignment may be used to align the particles. A particularly preferred conductive substrate is aluminum, although a number of other conductive substrates can also be used, e.g., stainless steel, titanium, platinum, gold, and the like. The solvent may then be evaporated from the slurry, forming a thin film of the electrode composition.

The electrode may be processed to the desired density. Suitable methods for processing the electrode composition include a variety of methods for transferring mechanical energy including, but not limited to, pressing, stamping, embossing, or rolling of the film. The electrode composition may also be heated during processing. The processing time is also an important factor influencing the final density. In different embodiments, the final density of the film after processing is greater than 1.0 $g/cm^3$. greater than or equal to 1.25 $g/cm^3$, or greater than or equal to 1.5 $g/cm^3$. The thickness of the electrode may be adjusted as required for the particular application. For applications requiring higher power density, it may be desirable to use thinner electrodes. Density is calculated using the formulae:

$$d = \frac{4m}{\pi D^2 h} \qquad (5)$$

where m=weight of the cathode disc in grams, D=diameter of the cathode (film or pellet) in centimeters and h=electrode thickness in centimeters.

In an embodiment, the first electrode mixture is processed by heating it above the melting temperature of the fluoropolymer. This preheating process can improve the contact between the electrically conducting material and the fluoropolymer. This preheating process can also modify the crystallinity of the fluoropolymer. In an embodiment, the first electrode mixture may be preheated in the presence of the electrolyte.

The electrochemical cell may be assembled by soaking or swelling the positive electrode in the electrolyte, soaking the separator in the electrolyte, assembling the positive electrode, separator and anode, and then sealing the cell.

In an embodiment, the invention provides an electrochemical device comprising a first electrode, a second electrode, and an ion transporting material disposed therebetween. In a primary lithium battery, for example, the aforementioned electrode serves as the cathode, with the anode providing a source of lithium ions, wherein the ion-transporting material is typically a microporous or nonwoven material saturated with a nonaqueous electrolyte. In an embodiment, the anode comprises lithium or a lithium alloy. The anode may comprise, for example, a foil or film of lithium or of a metallic alloy of lithium (LiAl, for example), or of carbon-lithium, with a foil of lithium metal preferred. The ion-transporting material may comprise a conventional "separator" material having low electrical resistance and exhibiting high strength, good chemical and physical stability, and overall uniform properties. Preferred separators herein, as noted above, are microporous and nonwoven materials, e.g., nonwoven polyolefins such as nonwoven polyethylene and/or nonwoven polypropylene, and microporous polyolefin films such as microporous polyethylene, Poly(tetrafluoro)ethylene (PTFE) and glass fibers. An exemplary microporous polyethylene material is that obtained under the name Celgard.RTM. (e.g., Celgard.RTM. 2400, 2500, and 2502) from Hoechst Celanese. The electrolyte is necessarily nonaqueous, as lithium is reactive in aqueous media. Suitable nonaqueous electrolytes are composed of lithium salts dissolved in an aprotic organic solvent such as propylene carbonate (PC), ethylene carbonate (EC), ethyl methyl carbonate (EMC), dimethyl ether (DME), and mixtures thereof. Mixtures of PC and DME are common, typically in a weight ratio of about 1:3 to about 2:1. Suitable lithium salts for this purpose include, without limitation, $LiBF_4$, $LiPF_6$, $LiCF_3SO_3$, $LiClO_4$; $LiAlCl_4$, and the like. It will be appreciated that, in use, a change in voltage causes generation of lithium ions at the anode and migration of the ions through the electrolyte-soaked separator to the subfluorinated carbonaceous material of the cathode, "discharging" the battery.

Low temperature electrolytes have been referenced in by Whitacre et al. (Low Temperature Li-CFx Batteries Based on Sub-Fluorinated Graphitic Materials J. Power Sources 160(2006)577-584; Enhanced Low-Temperature Performances of Li-CFx Batteries Electrochem. Solid State Let. 10 (2007) A166-A170).

In an embodiment, the invention provides an electrochemical device wherein the device is a primary lithium battery in which the first electrode acts as the cathode, the second electrode acts as the anode and comprises a source of lithium ions, and the ion-transporting material physically separates the first and the second electrode and prevents direct electrical contact therebetween.

In an embodiment, the invention provides a primary battery capable of providing a discharge voltage or voltage measured at the positive electrode greater than or equal to 1.5V, 2.0V, 2.25V, 2.5 V, or 2.75 V or from 1.5 V to 4V, 2.0 V to 4 V, 2.25V to 4 V, 2.5 V to 4 V, or 2.75 V to 4 V. In an embodiment, the capacity of the cell is greater than 200 mAh/g, 250 mAh/g, 300 mAh/g, 350 mAh/g, 400 mAh/g, or 450 mAh/g (per gram of active material).

If the discharge curves of the Li/Fluoropolymer or Li/Fluoro-organic batteries (with optional second active material) of the invention display a characteristic voltage delay (also sometimes called voltage suppression) at the initial discharge stage, this effect can be suppressed by pre-discharge of a portion (for example, less than or equal to 10%) of the capacity of the battery. In an embodiment, the pre-discharge procedure involves discharge of no more than 10% of the initial capacity of the cell. In an embodiment, the pre-discharge rate is less than or equal to 5% of the initial capacity of the cell. In different embodiments, the discharge time may be from 0.5 hour to 5 hours or from 1 to 3 hours. The discharge current may be constant or variable. Therefore, the invention also provides an electrochemical cell after discharge of no more than 10% of the initial capacity of the cell.

In another embodiment, the fluoropolymer or fluoro-organic material is utilized in a secondary battery, i.e., a rechargeable battery such as a rechargeable lithium battery. In such a case, the cations, e.g., lithium ions, are transported through a solid or a gelled polymer electrolyte-which also serves as a physical separator--to the fluoropolymer or fluoro-organic electrode, where they are intercalated and de-intercalated by the fluorinated material. Examples of solid polymer electrolytes include chemically inert polyethers, e.g., poly(ethylene oxide) (PEO), poly(propylene oxide) (PPO), and other polyethers, wherein the polymeric material is impregnated or otherwise associated with a salt, e.g., a lithium salt such as those set forth in the preceding paragraph. Examples of gelled polymer electrolytes include polyvinylidene difluoride (PVDF) homo- or co-polymer impregnated or otherwise associated with a non-aqueous electrolyte such as those set forth in the preceding paragraph.

Another embodiment provides an electrochemical device, wherein the device is a secondary battery in which the second electrode comprises a source of ions of a metal selected from Groups 1, 2, and 3 of the Periodic Table of Elements and the ion-transporting material comprises a solid polymer electrolyte that permits transport of said metal cations and physically separates the first and second electrodes.

In still a further aspect, a rechargeable battery is provided that includes: a first electrode comprising a fluoropolymer or fluoro-organic material, the electrode capable of receiving and releasing cations of a metal selected from Groups 1, 2, and 3 of the Periodic Table of the Elements; a second electrode comprising a source of the metal cations; and a solid or a gelled polymer electrolyte that permits transport of the metal cations and physically separates the first and second electrodes.

Electrochemical energy may be generated from the electrochemical cells of the invention at ambient or room temperature. In an embodiment, a greater discharge current and/or capacity may be obtained from the cell by heating the cell. Heat may be applied to the cell or a cell component through exposure of the cell or cell component to an ambient environment at elevated temperature (such as may be provided in oil drilling applications) or through use of heating devices.

As previously mentioned, the electrode compositions of the invention may comprises a subfluorinated carbonaceous material in addition to the fluoropolymer or fluoro-organic material. Subfluorinated carbonaceous materials are a class of fluorinated carbonaceous materials. As used herein, a fluorinated carbonaceous material is a carbonaceous material into which fluorine has been introduced. In the present invention, this fluorination will typically involve formation of bonds between carbon and fluorine. Fluorine is capable of forming both ionic and covalent bonds with carbon. In some cases, C-F bonds have also been classified as intermediate in strength between ionic and covalent bonds (e.g. partially ionic, semi-ionic, semi-covalent). The fluorination method can influence the type of bonding present in the fluorination product.

The average ratio of fluorine to carbon (F/C) may be used as a measure of the extent or level of fluorination. This average ratio may be determined through weight uptake measurements or through quantitative NMR measurements. When fluorine is not uniformly distributed through the wall thickness of the carbon material, this average ratio may differ from surface fluorine to carbon ratios as may be obtained through x-ray photoelectron spectroscopy (XPS) or ESCA. In some embodiments, the average ratio of fluorine to carbon (F/C) may be greater than or equal to 1. The term CF1 or CF may be used herein to refer to fluorinated carbon with a nominal fluorine to carbon ratio of about 1 or greater.

In an embodiment, the carbonaceous material is subfluorinated and includes an unfluorinated carbonaceous component and/or a "lightly fluorinated" carbonaceous component in which fluorine is not strongly bound to carbon. Multiphase subfluorinated carbonaceous materials may comprise a mixture of carbonaceous phases including, an unfluorinated carbonaceous phase (e.g., graphite or coke), a "lightly fluorinated" phase and one or more fluorinated phases (e.g., poly(carbon monofluoride ($CF_1$); poly(dicarbon monofluoride) etc.). In an embodiment, subfluorinated graphite or coke materials are produced by the methods described in U.S. Patent Application Publication 20070231697 to Yazami et al. and retain a greater amount of unfluorinated carbon, "lightly fluorinated" carbon, or a combinations thereof than materials of the same average F/C ratio produced with other types of fluorination processes previously known to the art. In different embodiments, the subfluorinated material has an average chemical composition CFx in which $0.18 \leq x \leq 0.95$, $0.33 \leq x \leq 0.95$, $0.36 \leq x \leq 0.95$, $0.5 \leq x \leq 0.95$, $0.63 \leq x \leq 0.95$, $066 \leq x \leq 0.95$, $0.7 \leq x \leq 0.95$; or $0.7 \leq x \leq 0.9$. In an embodiment, the subfluorinated graphite materials have a fluorine to carbon ratio greater than 0.63 and less than or equal to 0.95. In different embodiments, the amount of unfluorinated and "lightly fluorinated" carbon in the subfluorinated material is between 5% and 40%, between 5% and 37%, between 5% and 25%, between 10% and 20%, or about 15%.

In an embodiment, the subfluorinated carbonaceous material is a subfluorinated graphite material having an average chemical composition $CF_x$ in which $0.63 < x \leq 0.95$, wherein $^{13}$C nuclear magnetic resonance spectroscopy analysis of the subfluorinated graphite provides a spectrum comprising at least one chemical shift peak centered between approximately 100 and 150 ppm relative to TetraMethylSilane (TMS) and another chemical shift peak centered at approximately 84-88 ppm relative to TMS.

In an embodiment, the subfluorinated carbonaceous material is a subfluorinated coke material prepared by direct fluorination of coke having a coherence length $L_c$ between 5nm and 20 nm, the subfluorinated coke material having an average chemical composition $CF_x$ in which $0.63 < x \leq 0.95$. $^{13}$C nuclear magnetic resonance spectroscopy analysis of the subfluorinated coke provides a spectrum comprising at least one chemical shift peak centered between approximately 100 and 150 ppm relative to TetraMethylSilane (TMS) and another chemical shift peak centered at approximately 84-88 ppm relative to TMS.

In another embodiment, the subfluorinated material is a fluorinated carbon nanomaterial as described in U.S. Patent Application Publication 2007/0231696 to Yazami et al. These fluorinated carbon nanomaterials may comprise an unfluorinated carbon phase and at least one fluorinated carbon product in which at least some of the carbon is covalently bound or nearly covalently bound to fluorine, wherein the carbon nanomaterial has a substantially ordered multi-layered structure prior to fluorination. In different embodiments, the average ratio of fluorine to carbon is between 0.06 and 0.68, between 0.3 and 0.66 or between 0.3 and 0.6.

In another embodiment, the fluorinated carbon nanomaterial may comprise at least one fluorinated carbon product in which at least some of the carbon is covalently bound or nearly covalently bound to fluorine and in which the average interlayer spacing is intermediate between that of graphite poly(dicarbon monofluoride) and that of graphite poly(carbon monofluoride), wherein the carbon nanomaterial has a multi-layered structure prior to fluorination. In different embodiments, the average fluorine to carbon ratio is less than 1.0, between 0.3 and 0.8 or between 0.6 and 0.8, between 0.39 and 0.95, between 0.39 and 0.86, between 0.39 and 0.68, between 0.68 and 0.86, or between 0.74 and 0.86.

In an embodiment, the fluorinated carbon nanomaterial has some characteristics similar to those which would be produced by a mixture of graphite fluorides $(C_2F)_n$ and $(CF)_n$. X-ray diffraction analysis shows this product to have $2\Theta$ peaks centered at 12.0 degrees and 41.5 degrees. The interlayer spacing of this compound is approximately 0.72 nm. $^{13}$C-NMR spectra of this compound have a resonance present at 42 ppm, which indicates non-fluorinated $sp^3$ carbon.atoms. NMR analysis also indicates covalent bonding between carbon and fluorine. $CF_2$ and $CF_3$ groups may

also be present in minor amounts. Another fluorinated carbon product can have structural similarities to $(CF)_n$. X-ray diffraction analysis shows this compound to have $2\Theta$ peaks centered at greater than 12.0 degrees and less than 41.5 degrees. The interlayer spacing of this compound is approximately 0.60 nm. NMR analysis also indicates at covalent bonding between carbon and fluorine. $CF_2$ and $CF_3$ groups may also be present in minor amounts.

A range of carbonaceous materials are useful for fluorinated materials in electrodes of the present invention including graphite, coke, and carbonaceous nanomaterials, such as multiwalled carbon nanotubes, carbon nanofibers, multi-layered carbon nanoparticles, carbon nanowhiskers and carbon nanorods. In an embodiment, the invention uses subfluorinated carbonaceous materials obtained through direct fluorination of graphite or coke particles or carbon nanomaterials. Subfluorinated carbonaceous materials obtained through fluorination of graphite particles may also be referred to as subfluorinated graphites or subfluorinated graphite materials herein. Similarly, subfluorinated carbonaceous materials obtained through fluorination of coke particles may also be referred to as subfluorinated cokes or subfluorinated coke materials herein.

The reactivity of carbon allotropic forms with fluorine gas differs largely owing either to the degree of graphitization or to the type of the carbon material (Hamwi A. et al.; J. Phys. Chem. Solids, 1996, 57(6-8), 677-688). In general, the higher the graphitization degree, the higher the reaction temperature. Carbon fluorides have been obtained by direct fluorination in the presence of fluorine or mixtures of fluorine and an inert gas. When graphite is used as the starting material, no significant fluorination is observed below 300 °C. From 350 to 640 °C, two graphite fluorides, mainly differing in crystal structure and composition are formed: poly(dicarbon monofluoride) $(C_2F)_n$ and poly(carbon monofluoride) $(CF)_n$ (Nakajima T.; Watanabe N. Graphite fluorides and Carbon-Fluorine compounds, 1991, CRC Press, Boston; Kita Y.; Watanabe N.; Fujii Y.; J. Am. Chem. Soc., 1979, 101, 3832). In both compounds the carbon atoms take the $sp^3$ hybridization with associated distortion of the carbon hexagons from planar to 'chair-like' or 'boat-like' configuration. Poly(dicarbon monofluoride) is obtained at ~350 °C and has a characteristic structure, where two adjacent fluorine layers are separated by two carbon layers bonded by strongly covalent C-C bonding along the c-axis of the hexagonal lattice (stage 2). On the other hand, poly(carbon monofluoride) which is achieved at ~600 °C has a structure with only one carbon layer between two adjacent fluorine layers (stage 1). Graphite fluorides obtained between 350 and 600 °C have an intermediary composition between $(C_2F)_n$ and $(CF)_n$ and consist of a mixture of these two phases (Kita, **1979**, ibid.). The stage s denotes the number of layers of carbon separating two successive layers of fluorine. Thus a compound of stage 1 has a sequence of stacking of the layers as FCF/FCF ... , and a compound of stage 2 has the sequence FCCF/FCCF .... Both poly(dicarbon monofluoride) and poly(carbon monofluoride) are known to have relatively poor electrical conductivity. Subfluorinated carbonaceous materials include carbonaceous materials exposed to a fluorine source under conditions resulting in incomplete or partial fluorination of a carbonaceous starting material. Partially fluorinated carbon materials include materials in which primarily the exterior portion has reacted with fluorine while the interior region remains largely unreacted.

Carbon-fluorine intercalation compounds have been also obtained by incorporating other compounds capable of acting as a fluorination catalyst, such as HF or other fluorides, into the gas mixture. These methods can allow fluorination at lower temperatures. These methods have also allowed intercalation compounds other than $(C_2F)_n$ and $(CF)_n$ to be prepared (N. Watanabe et al., "Graphite Fluorides", Elsevier, Amsterdam, 1988, pp 240-246). These intercalation compounds prepared in the presence of HF or of a metal fluoride have an ionic character when the fluorine content is very low (F/C<0.1), or an iono-covalent character for higher fluorine contents (0.2<F/C<0.5). In any case, the bonding energy measured by Electron Spectroscopy for Chemical Analysis (ESCA) gives a value less than 687 eV for the most important peak of the $F_{1s}$ line and a value less than 285 eV for that of the $C_{1s}$ line (T. Nakajima, Fluorine-carbon and Fluoride-carbon, Chemistry, Physics and Applications, Marcel Dekker 1995 p.13).

In an embodiment, the subfluorinated carbonaceous materials used in the invention are multicomponent materials having a fluorinated carbonaceous component and an unfluorinated carbonaceous component and/or a "lightly fluorinated" carbonaceous component in which fluorine is not strongly bound to carbon. The presence of an unfluorinated and/or a "lightly fluorinated" carbonaceous component can provide higher electrical conductivity than would be obtained for a material consisting solely of the fluorinated phases poly(dicarbon monofluoride), poly(carbon monofluoride) and combinations thereof.

In an embodiment, the subfluorinated carbonaceous material comprises a plurality of nanostructured particles; wherein each of the nanostructured particles comprise a plurality of fluorinated domains and a plurality of unfluorinated domains. In the context of this description a "domain" is a structural component of a material having a characteristic composition (e.g., unfluorinated or fluorinated), phase (e.g., amorphous, crystalline, C.sub.2F, CF.sub.1, graphite, coke, carbon fiber, carbon nanomaterials such as multiwalled carbon nanotube, carbon whisker, carbon fiber etc.), and/or morphology. Useful subfluorinated carbonaceous materials for positive electrode active materials comprise a plurality of different domains. Individual fluorinated and unfluorinated domains preferably for some applications have at least one physical dimension (e.g., lengths, depths, cross sectional dimensions etc.) less than about 50 nanometers, and more preferably for some applications at least one physical dimension less than about 10 nanometers. Positive electrode active materials particularly useful for electrochemical cells providing high performance at low temperatures include nanostructured particles having fluorinated domains and unfluorinated domains that are distributed throughout each nanostructured particle of the active material, and in some embodiments substantially uniformly distributed throughout each nanostructured particle of the active material. In some embodiments, fluorinated domains of particles of the positive electrode active material comprise a subfluorinated carbonaceous material having an average stoichiometry CFy, wherein y is the average atomic ratio of fluorine atoms to carbon atoms and is selected from the range of about 0.8 to about 0.9, and the unfluorinated domains of the particles of the positive electrode active material comprise a unfluorinated carbonaceous phase, such as graphite, coke, multiwalled carbon nanotubes, multi-layered carbon nanofibers, multi-layered carbon nanoparticles, carbon nanowhiskers and carbon nanorods.

"Room temperature" refers to a temperature selected over the range of about 293 to 303 degrees Kelvin.

The terms and expressions which have been employed are used as terms of description and not of limitation, and it is recognized that various modifications are possible within the scope of the invention claimed. Thus, it should be understood that although the present invention has been specifically disclosed by preferred embodiments and optional features, modification and variation of the concepts herein disclosed may be resorted to by those skilled in the art, and that such modifications and variations are considered to be within the scope of this invention as defined by the appended claims.

In general the terms and phrases used herein have their art-recognized meaning, which can be found by reference to standard texts, journal references and contexts known to those skilled in the art. The preceding definitions are provided to clarify their specific use in the context of the invention.

Although the description herein contains many specifcities, these should not be construed as limiting the scope of the invention but as merely providing illustrations of some of the presently preferred embodiments of the invention. For example, thus the scope of the invention should be determined by the appended claims, rather than by the example given.

Reference Example 1: Li-PVDF Batteries

Cells were made comprising a PVDF-ABG cathode and a metallic lithium anode. The PVDF particles were KYNAR 2800 (Arkema). This material is a copolymer of PVDF and hexafluoropropylene (HFP) (Arkema product literature, Kynar PVDF, Resins for Battery Manufacture, 2007). The Acetylene Black Graphite (ABC) particles were from Superior Graphite. For a typical cathode composition, PVDF particles and Acetylene Black Graphite (ABG) particles were mixed at the selected weight ratio, with the PVDF being dissolved in acetone prior to mixing. The mixture was dried before pressing. The thickness was about 100-200 microns. In the test cells, a glassy fiber separator (Craneglas 230, Crane and Co.) was placed between the cathode and Li anode. The electrolyte was 1 M $LiBF_4$ in propylene carbonate (PC) (1:1). The softening temperature of the PDF was around 130-140 °C.

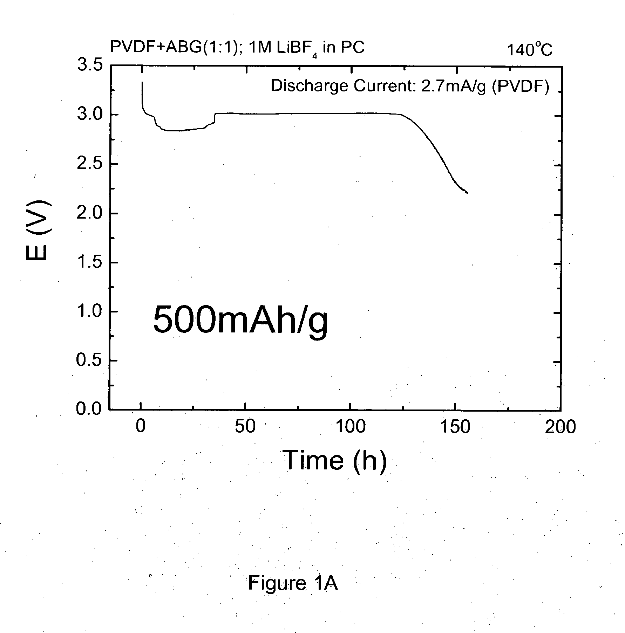

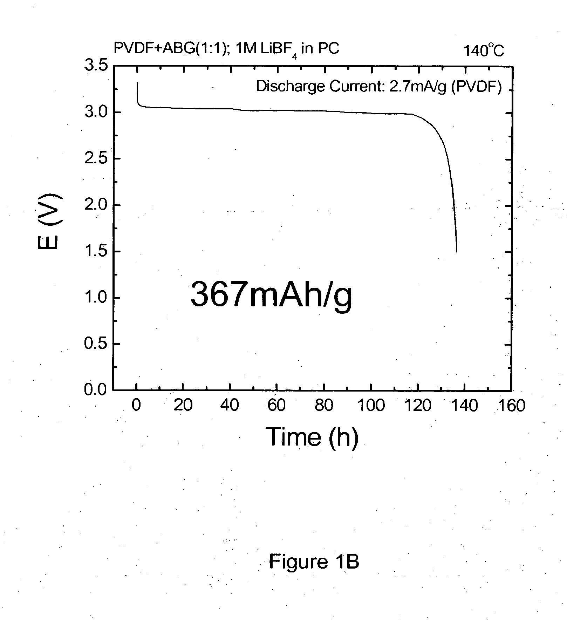

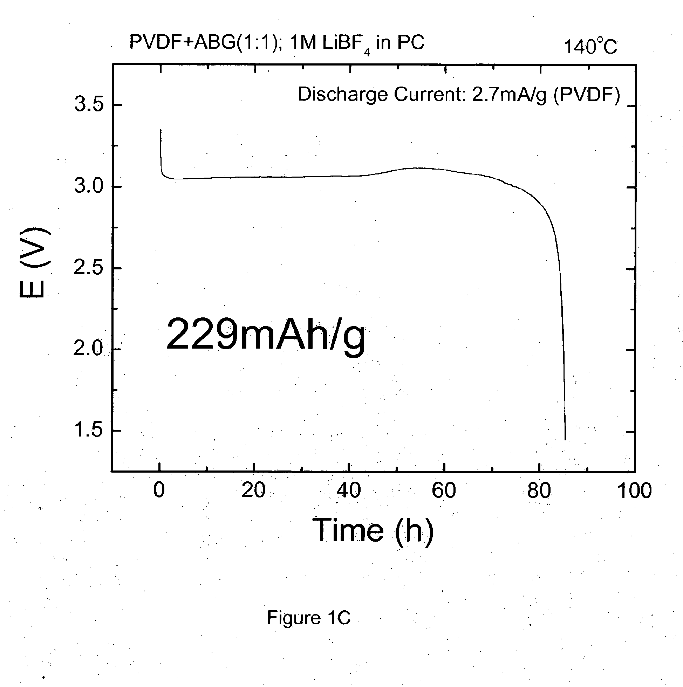

For the experiments above room temperature, the cell was placed in an oven. Figures 1a-1c shows discharge curves obtained with a 200 micrometer thick electrode and a cathode mixture of equal amounts (weights) of PVDF and ABG (1:1 ratio) at 140 °C. The discharge current was 2.7 mA/g (PVDF). The discharge voltage was approximately 3 V. The tested capacities were greater than 400 mA/g, 367 mA/g, and 229 mA/g (per g of PVDF).

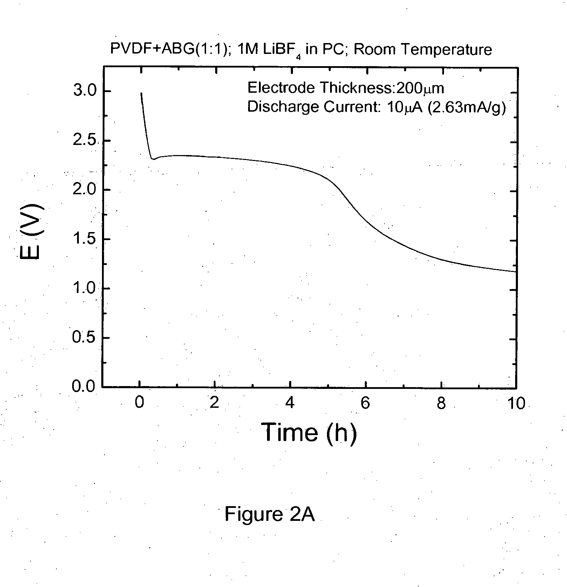

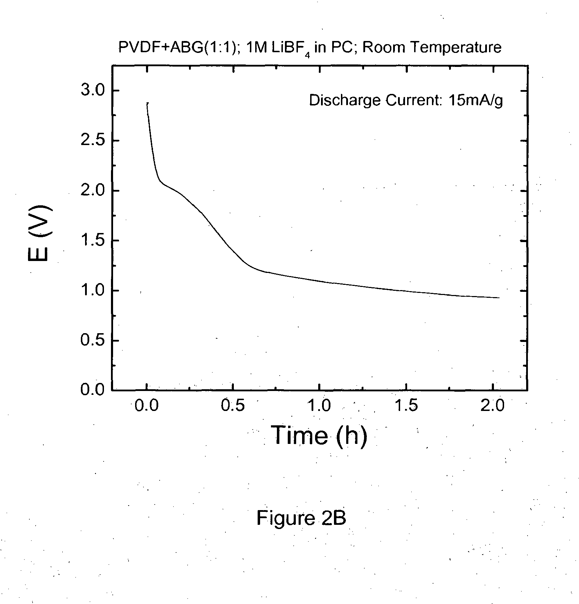

The battery capacities were dramatically lower at room temperature. For comparison, Figure 2a shows a discharge curve obtained for the same electrode composition at room temperature and a discharge current of 2.63 mA/g(PVDF) and 10 $\mu$A. The working potential is 2.2V. For a cutoff potential set at 1.5 V, the estimated capacity is 16 mA/g. Figure 2b shows a discharge curve for the same composition for a discharge current of 15 mA/g (PVDF). The potential dropped to 1V in half an hour. The open circuit voltage is about 3 V.

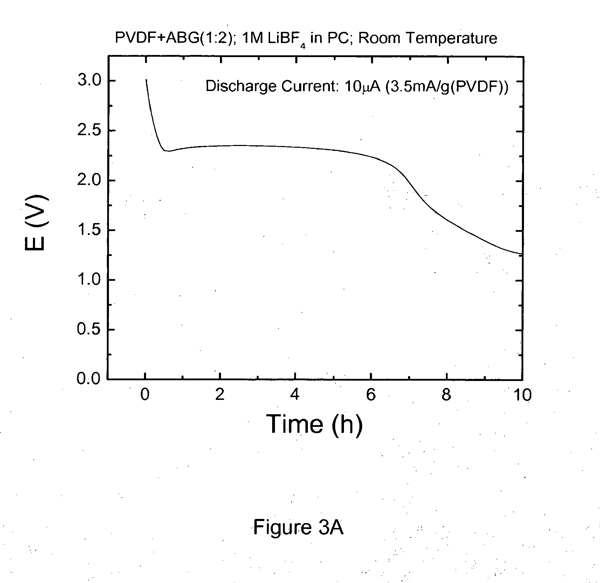

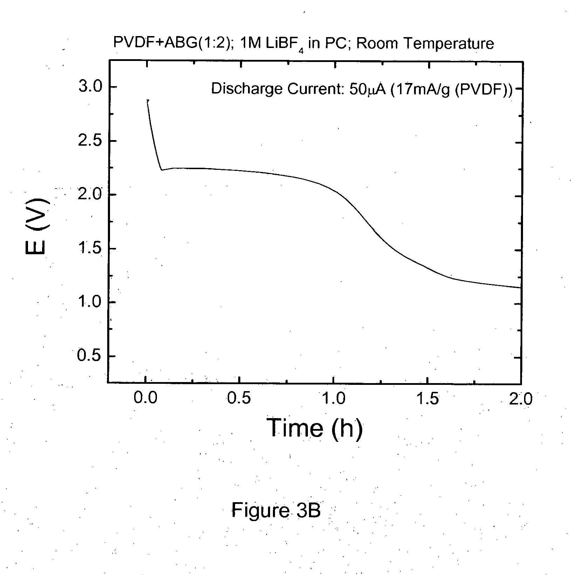

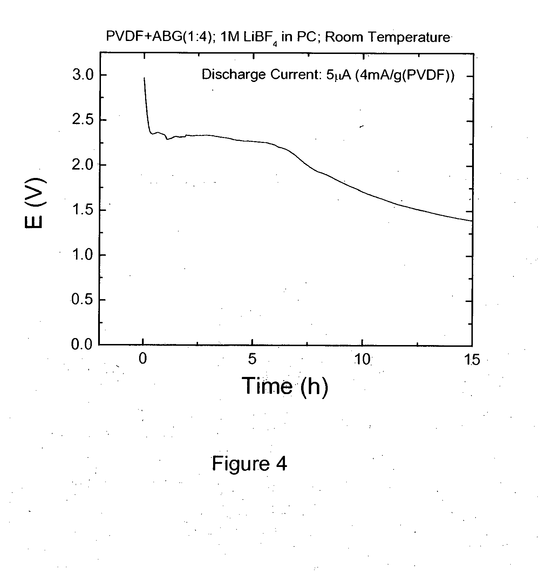

Batteries with higher carbon contents were also tested. The extra carbon is believed to increase the reaction surface area, thereby allowing increases in the working capacity. Figure 3a shows a discharge curve obtained for the 1:2 PVDF:ABG composition at room temperature and a discharge current of 3.5 mA/g(PVDF) and 10 $\mu$A. Figure 3b shows a discharge curve obtained for the 1:2 PVDF:ABG composition at room temperature and a discharge current of 17 mA/g(PVDF) and 50 $\mu$A. The working potential is about 2.25V in both cases; at 3.5 mA/g (PVDF) the tested capacity was 28 mA/g. Figure 4 shows a discharge curve obtained for a 1:4 PVDF:ABG composition at room temperature and a discharge current of 4 mA/g(PVDF) and 5 $\mu$A. The tested capacity was 40 mAh/g.

In another set of experiments, PVDF powder (Arkema Kynar® 2801) and ABG was mixed at the weight ratio of 6:4 in acetone. After acetone was vaporized in air, the obtained mixture was dried in vacuum overnight and then pressed to a pellet (1.6mm in diameter, 0.3mm thick) as the pressure was set at 80psi. The obtained PVDF pellet was soaked with 1 M LiBF4 in propylene carbonate (PC) for a half hour. It was placed into 2016-type coin cell as the cathode. Lithium foil was the anode. A piece of glassy fiber disk acted as the separator. The electrolyte was 1 M LiBF4 in PC. High temperature epoxy was pasted around the coin cell gasket to prevent the possible leakage at high temperature.

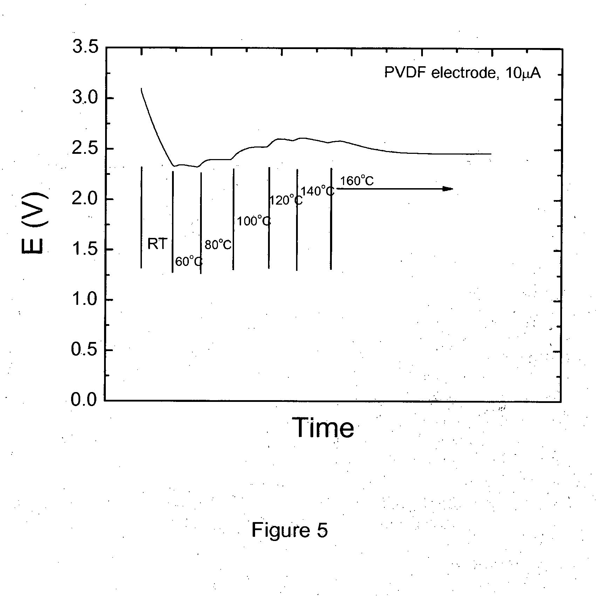

The cell was placed into a temperature test chamber and was discharged at 10$\mu$A when the chamber temperature was increased from room temperature (23°C) to 160oC. With the temperature increased, the working voltage rose from 2.3V to 2.6V and finally stable at 2.5V when T was 160oC, as shown in Figure 5.

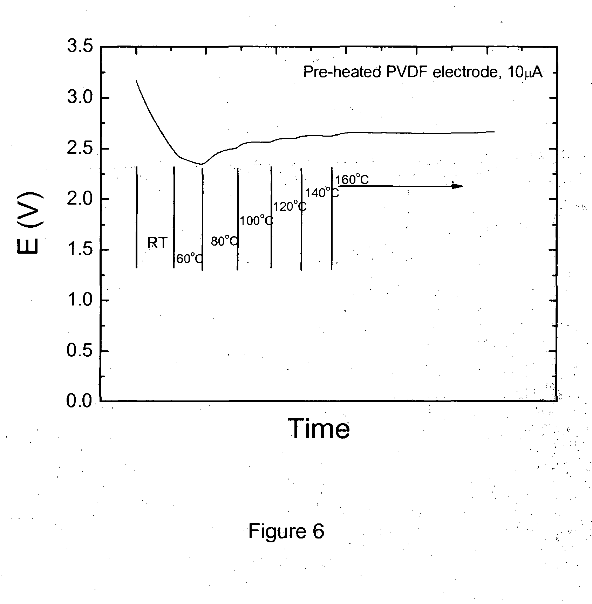

A similar PVDF (60%) pellet cell was pre-heated to 160°C, which is over the PVDF melting point. After staying at 160°C for two hours, the cell temperature was back to room temperature (RT). After resting at RT for a day, the cell was discharged at 10μA while heated again from RT to 160°C. Compared with fresh heated cell, this pre-heated PVDF shows a more stable, slightly higher working voltage at 2.7V at 160°C, as shown in Figure 6. When PVDF melted in cathode, it is believed to have formed a more uniform structured electrode with conducting carbon.

Reference Example 2: Li-PTFE Batteries

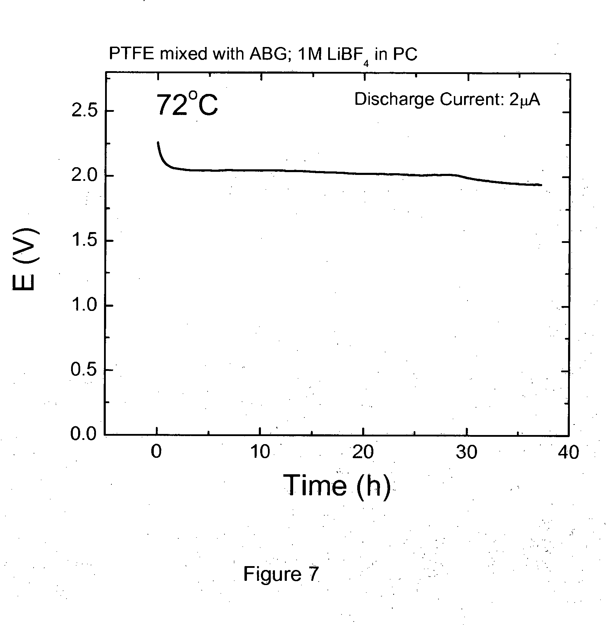

Cells were made comprising a PTFE-ABG cathode and a metallic lithium anode. The PTFE particles were approximately 0.5 mm in diameter. The Acetylene Black Graphite (ABC) particles were from Superior Graphite. For a typical cathode composition, PTFE particles and Acetylene Black Graphite (ABG) particles were mixed at the selected weight ratio in acetone prior to mixing. The mixture was dried before pressing. The thickness was about 100-200 microns. In the test cells, a glassy fiber separator (Craneglas 230, Crane and Co.) was placed between the cathode and Li anode. The electrolyte was 1M LiBF4 in PC(1:1). The melting point of PTFE is about 325°C. Figure 7 shows a discharge curve obtained with a cathode mixture of equal amounts of PTFE and ABG (1:1 ratio) at 72 °C. The discharge current was 2.0 μA. The discharge voltage was approximately 2 V.

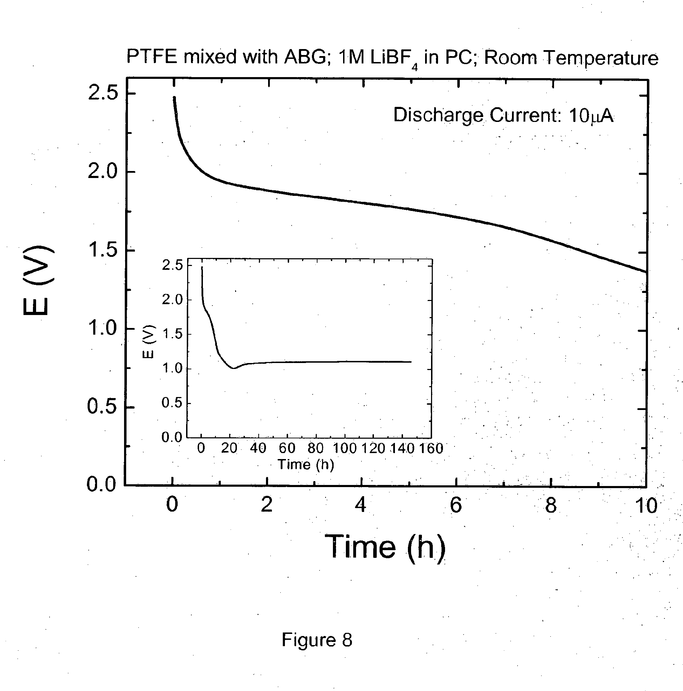

Figure 8 shows a discharge curve obtained with a cathode mixture of equal amounts of PTFE and ABG (1:1 ratio) at room temperature. The discharge current was 10 μA. The discharge voltage was between 1.5 and 2 V. The battery voltage was maintained at 1V for several days at a very low discharge rate.

Example 3: Li-PVDF-CFx Battery

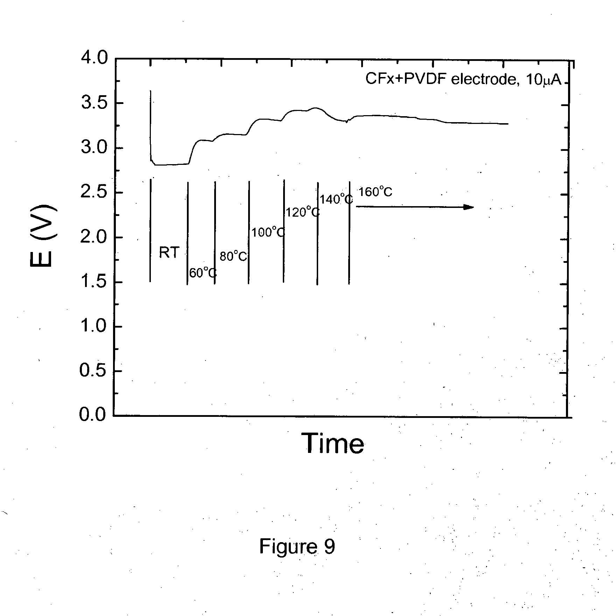

PVDF powder (Arkema Kynar® 2801) and ABG was mixed at the weight ratio of 6:4 in acetone with 20% graphite CFx (x=0.74) added into the mixture. After acetone was vaporized in air, the obtained mixture was dried in vacuum overnight and then pressed to a pellet (1.6mm in diameter, 0.3mm thick) as the pressure was set at 80psi. The obtained PVDF pellet was soaked with 1 M LiBF4 in propylene carbonate (PC) for a half hour. It was placed into 2016-type coin cell as the cathode. Lithium foil was the anode. A piece of glassy fiber disk acted as the separator. The electrolyte was 1 M LiBF4 in PC. High temperature epoxy was pasted around the coin cell gasket to prevent the possible leakage at high temperature.
The cell was placed into a temperature test chamber and was discharged at 10μA when the chamber temperature was increased from room temperature (23°C) to 160°C. The overall working voltage increased from 2.8V at room temperature to 3.3V at 160°C, as shown in Figure 9.

Reference Example 4: Cycling of Li-PVDF Battery

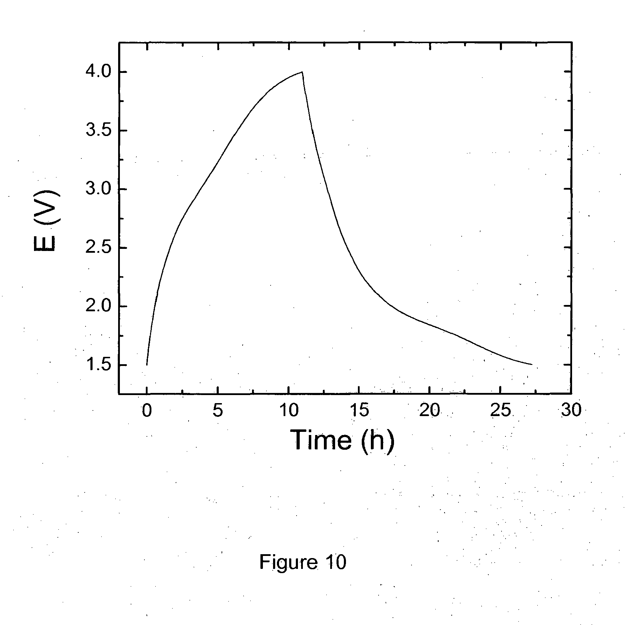

Rechargability was demonstrated for a battery formed from PVDF powder (Arkema Kynar® 2801) and ABG mixed at the weight ratio of 6:4. 50 mg of (PVDF + ABG) was combined with 250 mg of electrolyte, which was 1M LiBF$_4$ is PC. Figure 10 shows charging of a cell from an initial voltage of about 1.5 V to a voltage of about 4V, and the subsequent discharge (cycle 20, cycles 1-19 similar).

**Claims**

1. An electrochemical cell comprising

   a) a first electrode comprising a mixture of an electrically conducting material, a fluoropolymer or fluoro-oligomer having carbon-fluorine bonds and a second active material, the amount of fluoropolymer or fluorooligomer being greater than 50 wt% and less than 100 wt% of the mixture;
   b) a second electrode comprising a source of alkali metal or alkaline earth metal ions; and
   c) an electrolyte provided between the first and second electrodes, the electrolyte being ionically conducting, comprising alkali metal cations or alkaline earth metal cations, and being other than a fusible metal salt;

   **characterized in that** the amount of electrically conducting material in the first electrode is greater than or equal to 30 wt% of the mixture and the electrical conductivity of the mixture is greater than or equal to 1 x 10$^{-8}$ S/cm.

2. The electrochemical cell of claim 1, wherein the second active material is a subfluorinated carbon material.

3. The electrochemical cell of claim 2, wherein the subfluorinated carbon material has fluorine to carbon ratio of 0.63-0.95.

4. The electrochemical cell of claim 1, wherein the temperature of the first electrode is greater than or equal to 100°C.

5. The electrochemical cell of claim 1, wherein the second active material and the electrically conducting material together form the balance of the first electrode mixture.

6. The electrochemical cell of claim 1, wherein the second electrode comprises a source of lithium ions.

7. The electrochemical cell of claim 6, wherein the electrolyte comprises lithium cations.

8. A method of generating electrical energy electrochemically which comprises the steps of:

a) providing an electrochemical cell comprising a first electrode comprising a mixture of an electrically conducting material, a fluoropolymer or fluoro-oligomer having carbon-fluorine bonds and a second active material wherein the amount of electrically conducting material is greater than or equal to 30 wt% of the mixture, the amount of fluoropolymer or fluorooligomer is greater than 50 wt% and less than 100 wt% of the mixture and the electrical conductivity of the mixture is greater than or equal to $1 \times 10^{-8}$ S/cm; a second electrode comprising a source of alkali metal or alkaline earth metal ions; and an electrolyte provided between the first and second electrodes, the electrolyte being ionically conducting, comprising alkali metal cations or alkaline earth metal cations, and being other than a fusible metal salt; and
b) heating the electrochemical cell to a temperature less than the decomposition temperature of the fluoropolymer or fluoro-oligomer to draw an electric current therefrom.

9. The method of claim 8, wherein the cell is heated to a temperature greater than or equal to 100°C.

10. The method of claim 8, wherein the second active material is a subfluorinated carbon material.

11. The method of claim 9 wherein the subfluorinated carbon material has fluorine to carbon ratio of 0.63-0.95.

12. The method of claim 8, wherein the second active material and the electrically conducting material together form the balance of the first electrode mixture.

13. The method of claim 8, wherein the second electrode comprises a source of lithium ions and wherein the voltage at the first electrode is greater than or equal to 2.25 volts.

14. The method of claim 13, wherein the electrolyte comprises lithium cations.


**Patentansprüche**

1. Elektrochemische Zelle, umfassend

a) eine erste Elektrode umfassend ein Gemisch aus einem elektrisch leitenden Material, einem Fluorpolymer oder Fluoroligomer mit Kohlenstoff-Fluor-Bindungen und einem zweiten aktiven Material, wobei die Menge Fluorpolymer oder Fluoroligomer größer als 50 Gew.-% und weniger als 100 Gew.-% des Gemischs ist;
b) eine zweite Elektrode umfassend eine Quelle von Alkalimetall- oder Erdalkalimetall-Ionen; und
c) einen zwischen erster und zweiter Elektrode bereitgestellten Elektrolyt, wobei der Elektrolyt ionisch leitend ist, Alkalimetall-Kationen oder Erdalkalimetall-Kationen umfasst und anders als ein schmelzbares Metallsalz ist;

**dadurch gekennzeichnet, dass** die Menge elektrisch leitendes Material in der ersten Elektrode größer gleich 30 Gew.-% des Gemischs ist und die elektrische Leitfähigkeit des Gemischs größer gleich $1 \times 10^{-8}$ S/cm ist.

2. Elektrochemische Zelle nach Anspruch 1, worin das zweite aktive Material ein unterfluoriertes Kohlenstoff-Material ist.

3. Elektrochemische Zelle nach Anspruch 2, worin das unterfluorierte Kohlenstoff-Material ein Fluor-Kohlenstoff-Verhältnis von 0,63-0,95 aufweist.

**4.** Elektrochemische Zelle nach Anspruch 1, worin die Temperatur der ersten Elektrode größer gleich 100 °C ist.

**5.** Elektrochemische Zelle nach Anspruch 1, worin das zweite aktive Material und das elektrisch leitende Material zusammen den Rest des ersten Elektrodengemischs bilden.

**6.** Elektrochemische Zelle nach Anspruch 1, worin die zweite Elektrode eine Quelle von Lithium-Ionen umfasst.

**7.** Elektrochemische Zelle nach Anspruch 6, worin der Elektrolyt Lithium-Kationen umfasst.

**8.** Verfahren zum elektrochemischen Erzeugen von elektrischer Energie, das die folgenden Schritte umfasst:

a) Bereitstellen einer elektrochemischen Zelle umfassend eine erste Elektrode umfassend ein Gemisch aus einem elektrisch leitendem Material, einem Fluorpolymer oder Fluoroligomer mit Kohlenstoff-Fluor-Bindungen und einem zweiten aktiven Material, worin die Menge elektrisch leitendes Material größer gleich 30 Gew.-% des Gemischs ist, die Menge Fluorpolymer oder Fluoroligomer größer als 50 Gew.-% und weniger als 100 Gew.-% des Gemischs ist und die elektrische Leitfähigkeit des Gemischs größer gleich 1 x 10$^{-8}$ S/cm ist; einer zweiten Elektrode umfassend eine Quelle von Alkalimetall- oder Erdalkalimetall-Ionen; und eines Elektrolyts, der zwischen erster und zweiter Elektrode bereitgestellt ist, wobei der Elektrolyt ionisch leitend sind, Alkalimetall-Kationen oder Erdalkalimetall-Kationen umfasst und anders als ein schmelzbares Metallsalz sind; und
b) Erhitzen der elektrochemischen Zelle auf eine Temperatur unter der Zersetzungstemperatur des Fluorpolymers oder Fluoroligomers, um daraus einen elektrischen Strom zu beziehen.

**9.** Verfahren nach Anspruch 8, worin die Zelle auf eine Temperatur größer gleich 100 °C erhitzt wird.

**10.** Verfahren nach Anspruch 8, worin das zweite aktive Material ein unterfluoriertes Kohlenstoff-Material ist.

**11.** Verfahren nach Anspruch 9, worin das unterfluorierte Kohlenstoff-Material ein Fluor-Kohlenstoff-Verhältnis von 0,63-0,95 aufweist.

**12.** Verfahren nach Anspruch 8, worin das zweite aktive Material und das elektrisch leitende Material zusammen den Rest des ersten Elektrodengemischs bilden.

**13.** Verfahren nach Anspruch 8, worin die zweite Elektrode eine Quelle von Lithium-Ionen umfasst und worin die Spannung an der ersten Elektrode größer gleich 2,25 Volt ist.

**14.** Verfahren nach Anspruch 13, worin der Elektrolyt Lithium-Kationen umfasst.

**Revendications**

**1.** Cellule électrochimique comprenant :

a)une première électrode comprenant un mélange d'un matériau électriquement conducteur, un fluoropolymère ou un fluoro-oligomère comportant des liaisons carbone-fluor et un second matériau actif, la quantité de fluoropolymère ou de fluoro-oligomère étant supérieure à 50 % en poids et inférieure à 100 % en poids du mélange ;
b)une seconde électrode comprenant une source d'ions de métal alcalin ou d'ions de métal alcalino-terreux ; et
c) un électrolyte apporté entre les première et seconde électrodes, l'électrolyte étant ioniquement conducteur, comprenant des cations de métal alcalin ou des cations de métal alcalino-terreux, et l'électrolyte étant différent d'un sel de métal fusible ;

**caractérisé en ce que** la quantité de matériau électriquement conducteur dans la première électrode est supérieure ou égale à 30 % en poids du mélange, et **en ce que** la conductivité électrique du mélange est supérieure ou égale à 1 x 10$^{-8}$ S/cm.

**2.** Cellule électrochimique selon la revendication 1, dans laquelle le second matériau actif est un matériau de carbone sous-fluoré.

**3.** Cellule électrochimique selon la revendication 2, dans laquelle le matériau de carbone fluoré a un rapport fluor-carbone de 0,63 à 0,95.

4.   Cellule électrochimique selon la revendication 1, dans laquelle la température de la première électrode est supérieure ou égale à 100 °C.

5.   Cellule électrochimique selon la revendication 1, dans laquelle le second matériau actif et le matériau électriquement conducteur forment ensemble le reste du mélange de la première électrode.

6.   Cellule électrochimique selon la revendication 1, dans laquelle la seconde électrode comprend une source d'ions lithium.

7.   Cellule électrochimique selon la revendication 6, dans laquelle l'électrolyte comprend des cations lithium.

8.   Procédé de génération électrochimique d'une énergie électrique, comprenant les étapes consistant à :

   a) fournir une cellule électrochimique comprenant une première électrode comprenant un mélange d'un matériau électriquement conducteur, d'un fluoropolymère ou d'un fluoro-oligomère comportant des liaisons carbone-fluor, et d'un second matériau actif dans lequel la quantité de matériau électriquement conducteur est supérieure ou égale à 30 % en poids du mélange, la quantité de fluoropolymère ou de fluoro-oligomère est supérieure à 50 % en poids et inférieure à 100 % en poids du mélange, et la conductivité électrique du mélange est supérieure ou égale à $1 \times 10^{-8}$ S/cm ; une seconde électrode comprenant une source d'ions de métal alcalin ou d'ions de métal alcalino-terreux ; et un électrolyte apporté entre les première et seconde électrodes, l'électrolyte étant ioniquement conducteur, comprenant des cations de métal alcalin ou des cations de métal alcalino-terreux, et l'électrolyte étant différent d'un sel de métal fusible ; et
   b) chauffer la cellule électrochimique à une température inférieure à la température de décomposition du fluoropolymère ou du fluoro-oligomère afin d'en extraire un courant électrique.

9.   Procédé selon la revendication 8, dans lequel la cellule est chauffée à une température supérieure ou égale à 100 °C.

10.  Procédé selon la revendication 8, dans lequel le second matériau actif est un matériau de carbone sous-fluoré.

11.  Procédé selon la revendication 9, dans lequel le matériau de carbone fluoré a un rapport fluor-carbone de 0,63 à 0,95.

12.  Procédé selon la revendication 8, dans lequel le second matériau actif et le matériau électriquement conducteur forment ensemble le reste du mélange de la première électrode.

13.  Procédé selon la revendication 8, dans lequel la seconde électrode comprend une source d'ions lithium et dans lequel la tension au niveau de la première électrode est supérieure ou égale à 2,25 volts.

14.  Procédé selon la revendication 13, dans lequel l'électrolyte comprend des cations lithium.

Figure 1A

Figure 1B

Figure 1C

PVDF+ABG(1:1); 1M LiBF$_4$ in PC; Room Temperature

Electrode Thickness:200μm
Discharge Current: 10μA (2.63mA/g)

Figure 2A

PVDF+ABG(1:1); 1M LiBF$_4$ in PC; Room Temperature

Figure 2B

PVDF+ABG(1:2); 1M LiBF$_4$ in PC; Room Temperature

Figure 3A

Figure 3B

PVDF+ABG(1:4); 1M LiBF$_4$ in PC; Room Temperature

Figure 4

Figure 5

Figure 6

Figure 7

Figure 8

Figure 9

Figure 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 1357286 A
- US 20070231697 A, Yazami
- US 20020168569 A, Barriere
- US 3536532 A, Watanabe
- US 3700502 A, Watanabe
- US 4247608 A, Watanabe
- US 20070231696 A, Yazami
- US 20070077495 A
- US 20070077493 A, Yazami
- WO 2007040547 A
- US 6956018 B, Kozawa

- US 5753786 A, Watanabe
- US 4686161 A
- US 4765968 A, Shia
- US 4681823 A, Tung
- US 20070281213 A, Pyszczek
- US 3796604 A, Gabano J
- DE 19917000 A1
- US 6489055 B
- US 4052539 A
- US 6306540 B
- US 4840859 A

### Non-patent literature cited in the description

- **BRUCE, G.** *Development of a CFx D Cell for Man Portable Applications in Joint Service Power Expo,* 2005
- **M. FUKUDA ; T. IIJIMA.** Lithium Batteries. Academic Press, 1983
- **V.N. MITTKIN.** *J. Structural Chemistry,* 2003, vol. 44, 82-115
- *Zhurnal Structunoi Khimii,* 2003, vol. 44, 99-138
- **WITTINGHAM.** *Electrochem. Soc.,* 1975, vol. 122, 526
- **KAVEN, L.** *Chem. Rev.,* vol. 97 (8), 3061-3082
- **F. CHAMSSEDINE.** Reactivity of Carbon Nanotubes with Fluorine. *GasChem. Mat,* 2007, vol. 19, 161-172
- **YAZAMI et al.** Fluorinated Carbon Nanotubes for High Energy and High Power Densities Primary Lithium Batteries Electrochem. *Comm.,* 2007, vol. 9, 1850-1855
- **NOVAK, P.** *Chem. Rev.,* 1997, vol. 97 (1), 207-282
- **ASHIDE, H. et al.** *Electochem. Soc. Interface,* 2005, 32-36
- **SEEL ; DAHN.** *J. Electrochem. Soc.,* 2000, vol. 147 (3), 892-898

- **CONWAY, B.** *Journal of Solid State Electrochemistry,* 2003, vol. 7, 637
- **HU X et al.** *J. Electrochem. Soc.,* 2007, vol. 154, A1026-A1030
- **AMEDURI et al.** *J. Fluorine Chem.,* 2002, vol. 114, 171-176
- **SEKI, S. et al.** *J. Electrochem. Soc.,* 2007, vol. 154 (3), A173-A177
- **WHITACRE et al.** Low Temperature Li-CFx Batteries Based on Sub-Fluorinated Graphitic Materials. *J. Power Sources,* 2006, vol. 160, 577-584
- Enhanced Low-Temperature Performances of Li-CFx Batteries Electrochem. *Solid State Let.,* 2007, vol. 10, A166-A170
- **HAMWI A. et al.** *J. Phys. Chem. Solids,* 1996, vol. 57 (6-8), 677-688
- Graphite fluorides and Carbon-Fluorine compounds. **NAKAJIMA T. ; WATANABE N.** Graphite fluorides and Carbon-Fluorine compounds,. CRC Press, 1991
- **KITA Y. ; WATANABE N. ; FUJII Y.** *J. Am. Chem. Soc.,* 1979, vol. 101, 3832
- **N. WATANABE et al.** Graphite Fluorides. Elsevier, 1988, 240-246
- **T. NAKAJIMA.** Fluorine-carbon and Fluoride-carbon, Chemistry, Physics and Applications. Marcel Dekker, 1995, 13